# EUROPEAN PATENT SPECIFICATION

(11) **EP 2 810 055 B1**
(45) Date of publication and mention of the grant of the patent: **11.03.2020**
(21) Application number: 13705629.7
(22) Date of filing: 24.01.2013
(51) Int. Cl.: G02B 23/24, G01M 15/14, F01D 21/00, G01N 21/954

(54) **SYSTEM AND METHOD FOR AUTOMATED OPTICAL INSPECTION OF INDUSTRIAL GAS TURBINES AND OTHER POWER GENERATION MACHINERY WITH MULTI-AXIS INSPECTION SCOPE**
SYSTEM UND VERFAHREN ZUR AUTOMATISIERTEN OPTISCHEN INSPEKTION INDUSTRIELLER GASTURBINEN UND ANDERER STROMERZEUGUNGSMASCHINEN MIT MEHRACHSIGEM INSPEKTIONSUMFANG
SYSTÈME ET PROCÉDÉ D'INSPECTION OPTIQUE AUTOMATISÉE DE TURBINES À GAZ INDUSTRIELLES ET D'AUTRES MACHINES DE PRODUCTION D'ÉNERGIE AYANT UN PÉRIMÈTRE D'INSPECTION MULTI-AXE

(30) Priority: 31.01.2012 US 201213362352; 31.01.2012 US 201213362417; 31.01.2012 US 201213362387
(43) Date of publication of application: 10.12.2014
(73) Proprietor: Siemens Energy, Inc., Orlando, FL 32826-2399 (US)
(72) Inventor: HATCHER, JR., Clifford, Orlando, Florida 32826 (US)
(74) Representative: Maier, Daniel Oliver
(86) International application number: PCT/US2013/022924
(87) International publication number: WO 2013/116078

(56) References cited:
- EP-A2- 0 907 077
- US-A- 5 102 221
- US-A- 5 164 826
- US-A1- 2007 296 964

## Description

### BACKGROUND OF THE DISCLOSURE

### 1. Field of the Invention

The invention relates to optical camera systems for nondestructive internal inspection of industrial gas turbines and other power generation machinery, including by way of non-limiting example steam turbines and generators. More particularly the invention relates to an optical camera inspection system that is capable of automatically positioning the camera field of view (FOV) to an area of interest within the machinery and capturing images without human intervention. Automatic camera positioning and image capture can be initiated automatically or after receipt of operator permission.

### 2. Description of the Prior Art

Power generation machinery, such as steam or gas turbines, are often operated continuously with scheduled inspection and maintenance periods, at which time the turbine is taken off line and shut down. By way of example, a gas turbine engine often will be operated to generate power continuously for approximately 4000 hours, thereupon it is taken off line for routine maintenance, inspection, and repair of any components identified during inspection. Taking a gas turbine off line and eventually shutting it down completely for scheduled maintenance is a multi-day project. Some turbine components, such as the turbine rotor section, are operated at temperatures exceeding 1000°C (1832°F). The turbine requires 48-72 hours of cooling time to achieve ambient temperature before complete shutdown in order to reduce likelihood of component warping or other deformation. During the shutdown phase the turbine rotor is rotated in "turning gear mode" by an auxiliary drive motor at approximately 10 RPM or less, in order to reduce likelihood of rotor warping. Other turbine components, such as the turbine housing, are also cooled slowly to ambient temperature.

Once the turbine is cooled to ambient temperature over the course of up to approximately 72 hours internal components of the now static turbine can be inspected with optical camera inspection systems. Known optical camera inspection systems employ rigid or flexible optical bore scopes that are inserted into inspection ports located about the turbine periphery. The bore scope is manually positioned so that its field of view encompasses an area of interest within the turbine, such as one or more vanes or blades, combustor baskets, etc. A camera optically coupled to the bore scope captures images of objects of interest within the field of view for remote visualization and archiving (if desired) by an inspector.

If a series of different images of different areas of interest within a given turbine inspection port are desired, the operator must manually re-position the camera inspection system bore scope to achieve the desired relative alignment of internal area of interest and the field of view. Relative alignment can be achieved by physically moving the bore scope so that its viewing port is positioned proximal a static area of interest. Examples of such relative movement of bore scope and static turbine component are by inserting a bore scope in different orientations within a static combustor or radially in and out of space between a vane and blade row within the turbine section. Relative alignment can also be achieved by maintaining the bore scope viewing port in a static position and moving the turbine internal component of interest into the static viewing field. An example of relative movement of turbine internal component and static bore scope is inspection of different blades within a blade row by manually rotating the turbine rotor sequentially a few degrees and capturing the image of a blade. The rotor is rotated sequentially to align each desired individual blade in the row within the camera viewing field.

Complete turbine inspection requires multiple manual relative repositioning sequences between the camera inspection system viewing port and areas of interest within the turbine by a human inspector. Inspection quality and productivity is subject to the inspection and manipulation skills of the inspector and inspection team. Inspection apparatus positioning is challenging due to the complex manipulation paths between components in a gas turbine. For example, insertion of a bore scope through a combustor inspection port in order to inspect the leading edge of first row vanes or related supports requires compound manipulations. Improper positioning of inspection apparatus within a turbine potentially can damage turbine internal components. Often an inspection team of multiple operators is needed to perform a manual inspection using known inspection methods and apparatus. In summary, known manual camera inspection procedures and inspection system manipulation are time consuming, repetitive in nature, and often require assistance of an inspection team of multiple personnel. The "human factor" required for known manual camera inspection procedures and inspection system manipulation introduces undesirable inspection process variances based on human skill level differences. Given human skill variances, some inspection teams are capable of completing inspections in less time, achieve better image quality and have lower inspection damage risk than other teams. Ideally skills of a high performing inspection team could be captured for use by all teams.

A need exists in the art for optical camera inspection systems and methods that reduce total time necessary to perform a nondestructive internal inspection of power generation machinery, including by way of non-limiting example steam or gas turbines and generators than is attainable by known inspection apparatus and methods, so that the machinery can be brought back on line for resuming power generation more quickly during maintenance cycles.

Another need exists in the art for optical camera inspection systems and methods that are capable of positioning inspection apparatus within power generation machinery, including by way of non-limiting example steam or gas turbines and generators, consistently and repetitively within an individual machine's inspection cycle or within inspection cycles of multiple different machines, with minimized risk of damage to machine internal components, high image quality and quicker inspection cycling time than is attained by the known manual inspection apparatus and methods.

Yet another need exists in the art for optical camera inspection systems and methods that help to equalize inspection skill level and productivity among different inspection teams.

US 2007/296964 A1 discloses an inspection apparatus for performing a visual inspection of internal structural members of a large-scale system from the outside without disassembling the system. The inspection apparatus comprises a tubular screw device. The screw device is inserted into a narrow pathway of the large-scale system and a rotational force is applied to the screw device. The screw device engages with surfaces of the internal structural members of the large-scale system while advancing along the narrow pathway. A video scope with a camera at its end is inserted into the screw device so as to protrude from an end of the screw device. The video scope captures images of the internal structural members of the large-scale system. The inspection apparatus includes a video monitor for displaying the images from the video scope and for controlling a direction of the end of the video scope.

### SUMMARY OF THE INVENTION

Accordingly, potential objects of the present invention, jointly or severally among others, are to create optical camera inspection systems and methods for power generation machinery, (including by way of non-limiting example steam or gas turbines and generators) that compared to known inspection apparatus and methods: reduce total scheduled maintenance period time and individual inspection cycle time; position inspection apparatus consistently and repetitively within an individual machine's inspection cycle or within inspection cycles of multiple different machines, with minimized risk of damage to machine internal components and high image quality; and that help to equalize inspection skill level and productivity among different inspection teams.

Internal components of power generation machinery, such as gas and steam turbines or generators, are inspected with an optical camera inspection system that is capable of automatically positioning the camera field of view (FOV) to an area of interest within the machinery along a pre-designated navigation path and capturing images without human intervention. Automatic camera positioning and image capture can be initiated automatically or after receipt of operator permission. The pre-designated navigation path can be defined by operator manual positioning of an inspection scope within the power machine or a similar one of the same type, and recording the sequence of positioning steps for future replication. The navigation path can also be defined by virtual simulation.

These and other objects are achieved in accordance with the present invention by a system for internal inspection of power generation machinery, including industrial gas turbines. The system includes a mounting flange for affixation to a gas turbine inspection port. The system includes an inspection scope having an elongated body defining a central axis, a proximal end coupled to the mounting flange, and a distal end for insertion within a gas turbine inspection port. A linear drive translates the inspection scope along its central axis. A rotational drive rotates the inspection scope about its central axis. A camera head, having a field of view, is coupled to the inspection scope body distal end. A camera is coupled to the inspection scope, for capturing an image transmitted by the camera head. The system also includes a control system, coupled to the linear and rotational drives and the camera, for automatically positioning the inspection scope and field of view along a pre-designated navigation path within a gas turbine to an internal area of interest and for capturing a camera image thereof without human intervention.

The present invention also features a method for internal inspection of a gas turbine, comprising the steps of providing an internal inspection system having a mounting flange for affixation to a gas turbine inspection port and an inspection scope. The inspection scope has an elongated body defining a central axis, a proximal end coupled to the mounting flange, and a distal end for insertion within a gas turbine inspection port. The inspection scope has a linear drive for translating the inspection scope along its central axis, and a rotational drive for rotating the inspection scope about its central axis. A camera head, having a field of view, is coupled to the inspection scope body distal end. A camera coupled to the inspection scope, for capturing an image transmitted by the camera head. The system also has a control system, coupled to the linear and rotational drives and the camera, for automatically positioning the inspection scope and field of view along a pre-designated navigation path within a gas turbine to an internal area of interest and for capturing a camera image thereof without human intervention. Next, the mounting flange is affixed to a gas turbine inspection port and the inspection scope distal end is inserted into the gas turbine inspection port. A navigation path is provided to the control system. Then the gas turbine is inspected by automatically positioning the inspection scope and field of view along the navigation path with the control system and capturing a camera image thereof without human intervention. The camera image is stored for review. The order of steps may be modified when performing this method.

The present invention also features a method for inspecting an industrial gas turbine. First, the gas turbine is shut down to cease power generation operation. An internal inspection system is provided that has a mounting flange for affixation to a gas turbine inspection port and an inspection scope. The inspection scope has an elongated body defining a central axis, a proximal end coupled to the mounting flange, and a distal end for insertion within a gas turbine inspection port. The inspection scope has a linear drive for translating the inspection scope along its central axis and a rotational drive for rotating the inspection scope about its central axis. A camera head, having a field of view, is coupled to the inspection scope body distal end. A camera is coupled to the inspection scope, for capturing an image transmitted by the camera head. The system also has a control system, coupled to the linear and rotational drives and the camera, for automatically positioning the inspection scope and field of view along a pre-designated navigation path within a gas turbine to an internal area of interest and for capturing a camera image thereof without human intervention. In practicing the method the gas turbine is cooled to an internal temperature of less than 150°C (300°F). Thereafter the mounting flange is affixed to a turbine section inspection port located between blade and vane rows. A navigation path is provided to the control system. The turbine section is inspected automatically by positioning the inspection scope and field of view automatically along the navigation path with the control system and capturing a camera image thereof without human intervention. The camera image is stored for review. The order of steps may be modified when performing this method.

The navigation path is pre-determined by a number of methods and subsequently recorded for future replication by the control system of the actual inspection scope used in the inspecting step. The navigation path pre-determination methods may include: prior human controlled positioning of an inspection scope of the type used in the inspecting step within the actual inspected gas turbine (or within another gas turbine having the same type of internal structure as the actual inspected gas turbine) along a selected navigation path; human controlled simulated positioning of a virtual inspection scope of the type used in the inspecting step within a virtual power generation machine of the type being inspected along a selected navigation path; and simulated positioning of a virtual inspection scope and virtual power generation machine of the type used in the inspecting step along a simulated selected navigation path without human intervention.

The objects and features of the present invention may be applied jointly or severally in any combination or subcombination by those skilled in the art.

### BRIEF DESCRIPTION OF THE DRAWINGS

The teachings of the present invention can be readily understood by considering the following detailed description in conjunction with the accompanying drawings, in which:
FIG. 1 is a partial cross sectional schematic view of a known gas turbine;
FIG. 2 is a partial cross sectional schematic view of a known gas turbine showing partial insertion of an optical camera inspection system embodiment of the present invention into a combustor inspection port;
FIG. 3 is partial cross sectional schematic view of a known gas turbine performing an inspection of a combustor internal components with the optical camera inspection system of FIG. 2;
FIG. 4 is partial cross sectional schematic view of a known gas turbine performing an inspection of the leading edge of row 1 turbine blades with the optical camera inspection system of FIG. 2;
FIG. 5 is a perspective schematic view of the optical camera inspection system of the embodiment of FIG. 2, showing available degrees of motion Ω, T, Φ, E and θ;
FIG. 6 is a perspective schematic view of the optical camera inspection system of FIG. 5, in the folded insertion position of FIG. 2;
FIG. 7 is a perspective schematic view of the optical camera inspection system of FIG. 5, in the locked inspection position of FIG. 3;
FIG. 8 is a perspective schematic view of the extension tube mechanism portion of the optical camera inspection system of FIG. 5, showing the Q and T degrees of motion;
FIG. 9 is a schematic perspective view of an adapter ring of the present invention being attached to a turbine inspection port;
FIG. 10 is a schematic elevational view of a camera head articulation and rotation (pan) mechanism of the optical camera inspection system of FIG. 5, showing the Φ and θ degrees of motion;
FIG. 11 is a schematic plan view of a camera head articulation and rotation (pan) mechanism of FIG. 10;
FIG. 12 is a schematic elevational view of a camera head extension mechanism of the optical camera inspection system of FIG. 5, showing the E degree of motion;
FIG. 13 is a schematic perspective view of the camera head of the optical camera inspection system of FIG. 5;
FIG. 14 is a schematic exploded perspective view of a camera head of the optical camera inspection system of FIG. 5;
FIG. 15 is a schematic partial assembly perspective view of the camera head of FIG. 14;
FIG. 16 is a block diagram of the control box and controls system for the optical camera inspection system of FIG. 5;
FIG. 17 is a perspective schematic view of an embodiment of a tablet computer human machine interface (HMI) for operator remote monitoring and control of the optical camera inspection system of the present invention;
FIG. 18 is a partial cross sectional schematic view of a known gas turbine showing insertion of another optical camera inspection system embodiment of the present invention into two separate turbine section rows respective inspection ports;
FIG. 19 is an elevational perspective view of optical camera inspection system embodiment of FIG. 18, showing available degrees of motion T, θ and Φ; and
FIG. 20 is an elevational view of the swing prism articulation mechanism for the Φ degree of motion.

To facilitate understanding, identical reference numerals have been used, where possible, to designate identical elements that are common to the figures.

### DETAILED DESCRIPTION

After considering the following description, those skilled in the art will clearly realize that the teachings of the present invention can be readily utilized in optical camera systems for nondestructive internal inspection of power generation machinery, including by way of non-limiting example steam or gas turbines and generators. The optical camera inspection system is capable of automatically positioning the camera field of view (FOV) to an area of interest within the machinery and capturing images without human intervention. Automatic camera positioning and image capture can be initiated automatically or after receipt of operator permission. Alternatively, the system may be human-operated in "manual" mode.

### Camera Inspection System Overview

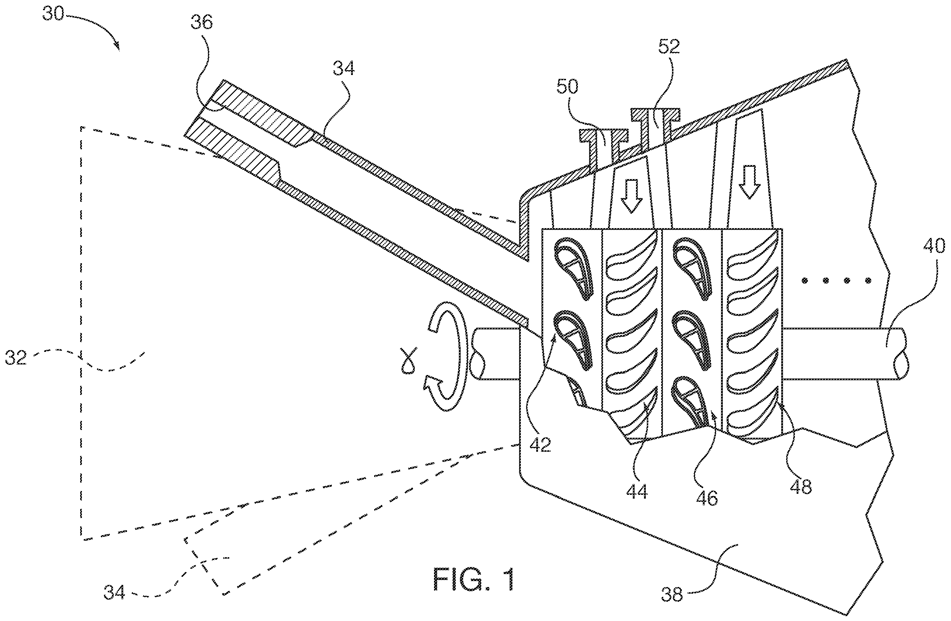

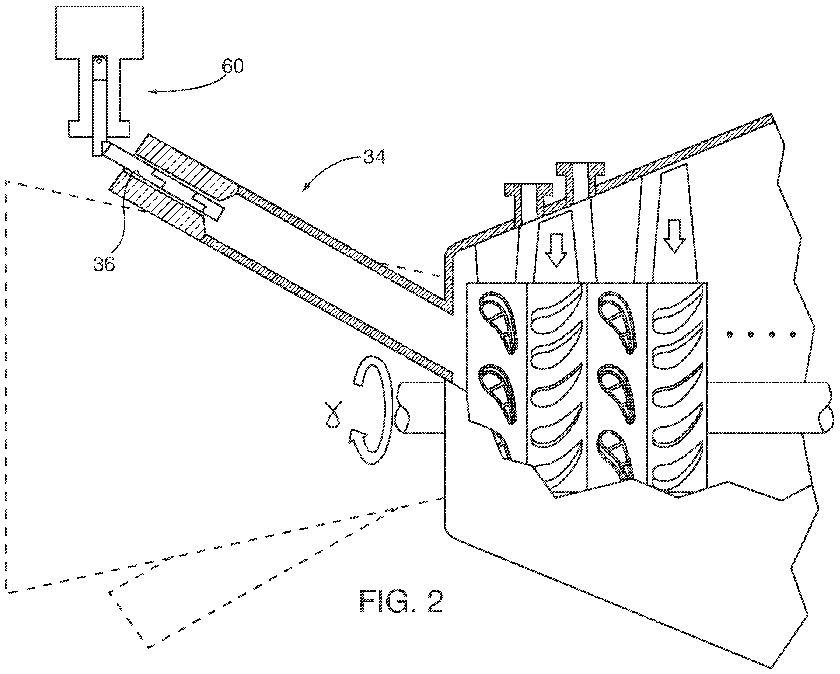

Referring to FIG. 1, embodiments of the present invention facilitate automated off-line remote visual inspection of gas turbine 30 internal components, including combustors 34, turbine section Row 1 and Row 2 fixed vanes 42, 46; leading Row 1 and Row 2 rotating blades 44, 48; and ring segments. As shown in FIGs. 2-4 and 18, embodiments of the present invention inspection system enables inspection of offline turbines that have not fully cooled to ambient temperature by attaching remote-actuated optical camera inspection scope probes 60, 220 to turbine inspection ports 36, 50 and 52. Upon attachment the inspection scope probes 60, 220 are selectively positioned (manually by an operator or automatically without an operator) via internal motion control servo motors that are under command of a motion control system. Image data are acquired, captured, and if desired archived for further analysis.

### Articulated Inspection Scope

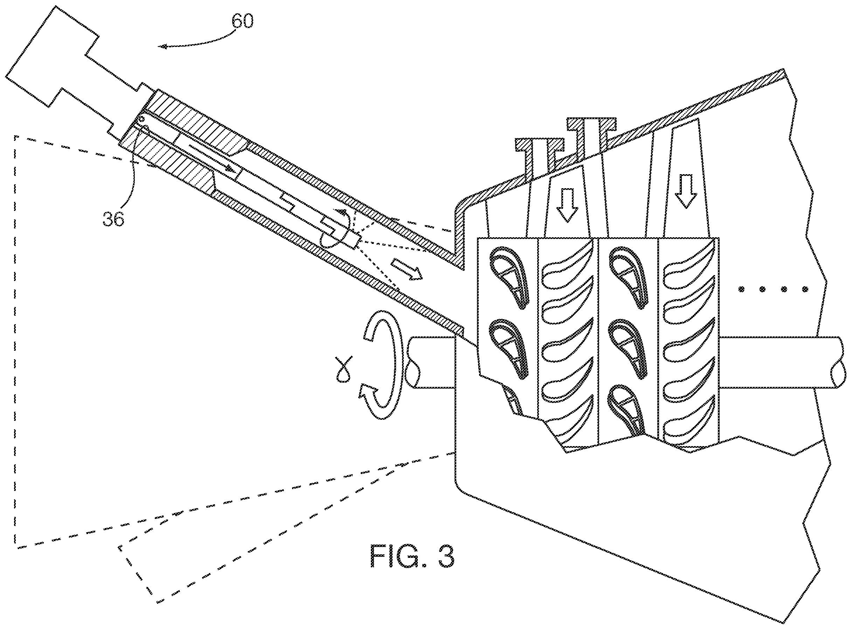

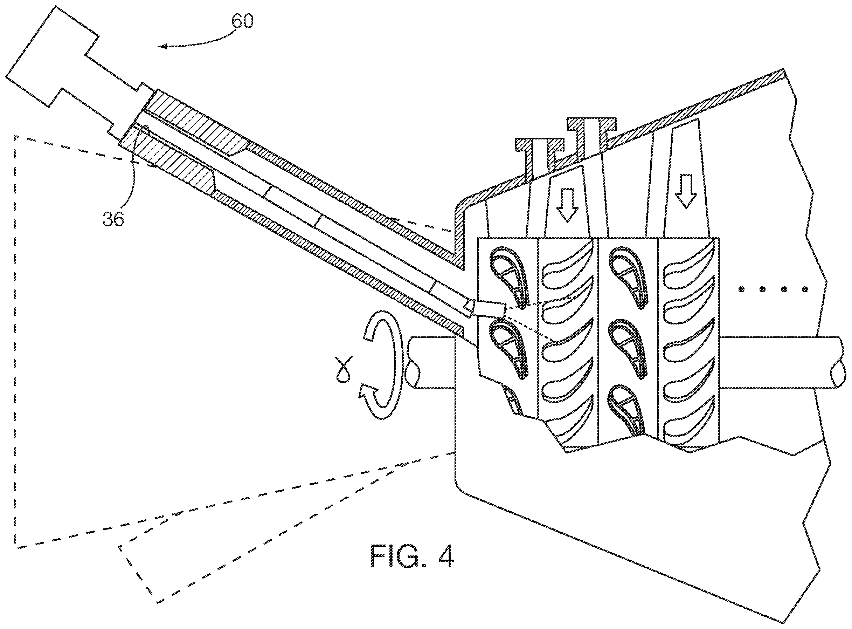

FIGs. 2-4 show inspection of a gas turbine by insertion (FIG. 2) of an articulated inspection scope embodiment 60 into a combustor 34 inspection port 36. For maneuvering clearance of the scope 60 about the confines of a gas turbine installation, inspection scope 60 has a folding knuckle, so that the scope can be folded into a generally L-shape profile about half as long as an elongated scope. Once the inspection scope 60 is positioned within the inspection port 36, the knuckle is straightened, as shown in FIG. 3. After the inspection scope 60 is affixed to the inspection port 36 it may be utilized to inspect to combustor internal components by rotating and extending its camera head. In FIG. 4, as the scope 60 is further extended and its camera head articulated images of the Row 1 vanes and leading edge of Row 1 blades may be acquired. If the turbine rotor is in turning mode, images of all Row 1 blades may be captured as they rotate past the camera head field of view.

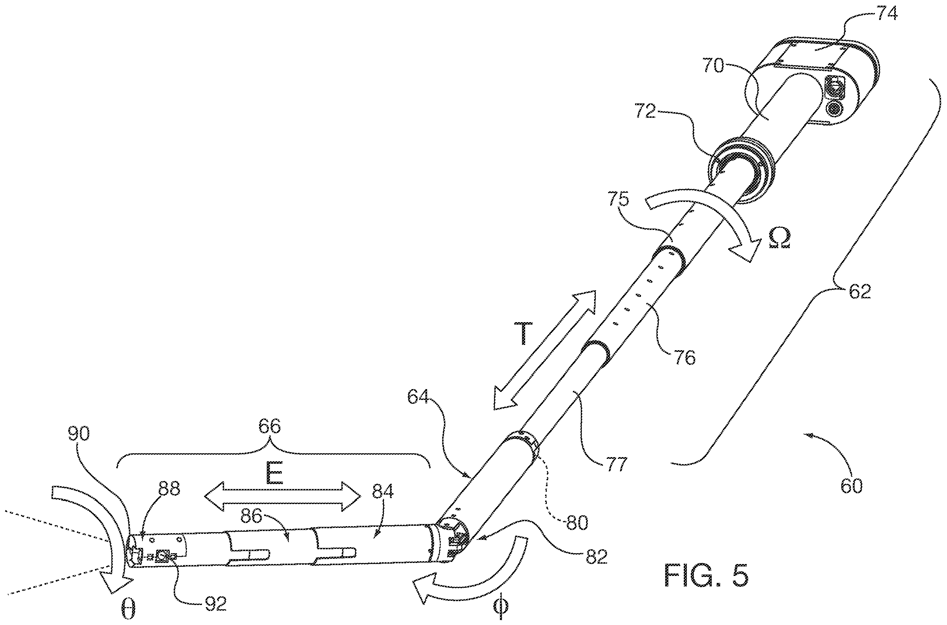

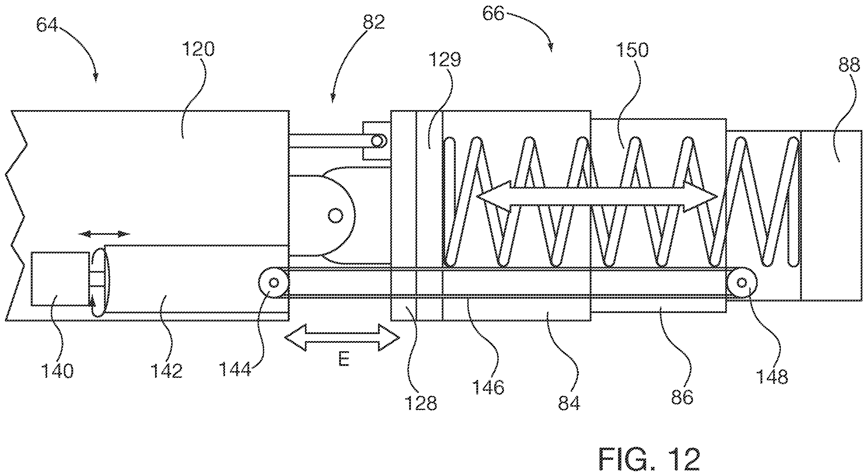

Referring to FIG. 5, the inspection scope 60 has three main component sections: extension tube section 62 (see FIGs. 5-9); motor can 64 (FIGs. 5, 10-12); and camera tip 66 (FIGs. 5, 12-15) that are capable of performing the following five degrees of motion freedom:
Ω -- gross rotation;
T -- telescoping extension;
Φ -- camera head articulation;
E -- camera head tip extension; and
θ -- camera head rotate/pan.

The extension tube section 52 has a mounting tube 70 and mounting collar 72 that are attached to an inspection port, such as the combustor inspection port 36. Motor housing 74 is attached to the opposite end of mounting tube 70 distal the mounting collar 72 and houses the servo motors necessary to perform the Q and T degrees of motion. Three telescoping tubes 75-77 collapse into the mounting tube 70 for providing the T directional motion.

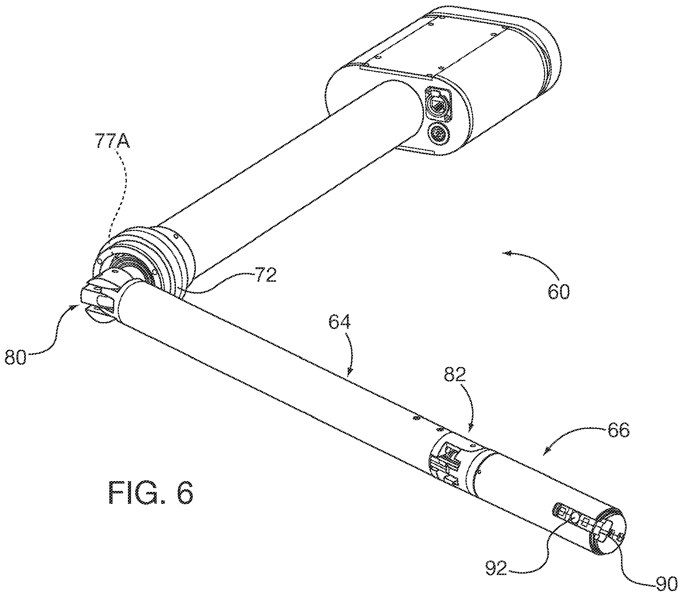

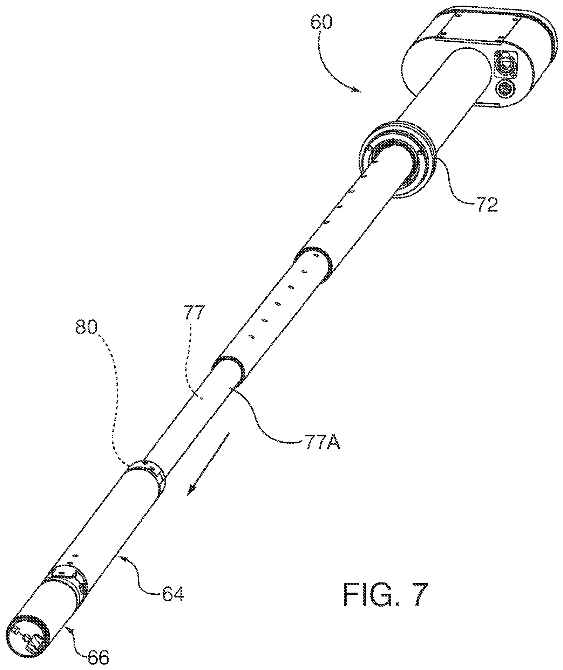

As shown in FIGs. 6 and 7, spring loaded locking knuckle 80 enables the entire inspection scope 60 to fold for compact maneuvering about the turbine 30, as shown in FIG. 2 and described above. Locking sleeve 77A slides over telescoping tube 77 and restrains knuckle 80 therein when the inspection scope 60 is in is locked inspection position as shown in FIG. 7.

As shown in FIG. 5, motor can 64 houses the servo motors necessary to position motorized articulating joint 82 that provides the Φ degree of motion, the camera head 66 head extension motion E via the camera head telescoping extensions 84, 86 and the camera head 88 rotate/pan degree of motion θ. The camera head 88 includes camera ports 90, 92 for respective axial and lateral fields of view (FOV).

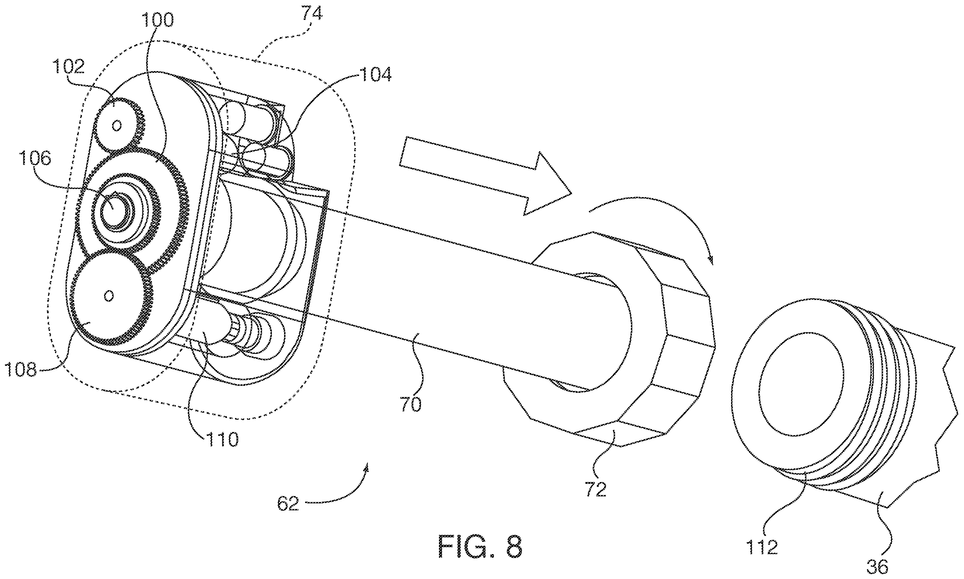

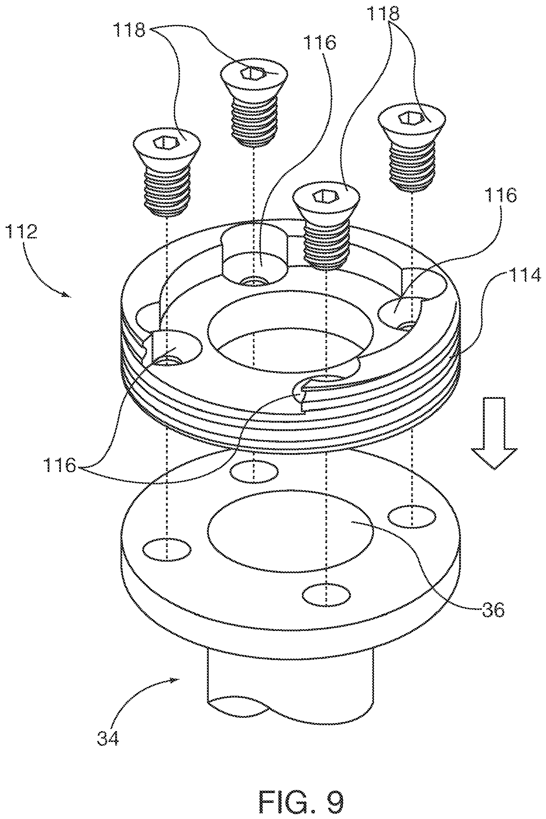

FIG. 8 is a detailed view of the motor housing 74, showing two coaxially nested, independently driven large and small diameter gears in the rotation hub 100. Rotate drive gear 102 is driven by the rotate servo motor 104, for effectuating the Q motion by rotating the larger diameter gear in the rotation hub 100. Telescope extension drive screw 106 is rigidly coupled to the smaller diameter gear in rotation hub 100, that in turn engages the extend drive gear 108. Extend servo motor 110 is responsible for effectuating the T motion by rotating the smaller diameter in the rotating hub 100. Mounting collar 72 attaches to adapter ring 112, that is in turn attached to an inspection port, such as the combustor inspection port 36. As shown in FIG. 9, the adapter ring includes a plurality of peripheral threads 114 that are engaged with mating internal threads within the collar 72. The adapter ring 112 has mounting holes 116 for receipt of tapered head machine screws 118. The screws 118 may be captively mounted within adapter ring 112. Other configurations of adapter ring or other forms of base that affixes the scope to an inspection port may be substituted for the adapter ring 112.

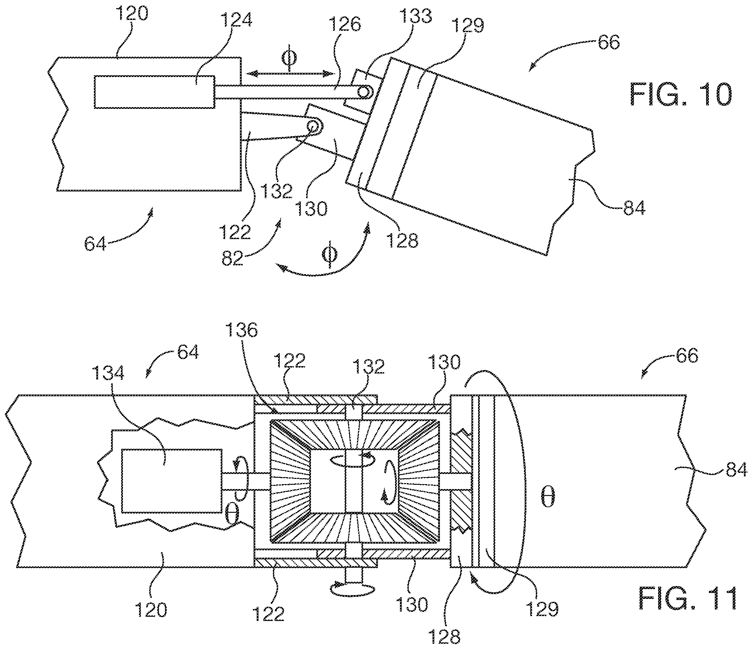

Referring to FIG. 10, motor can 64 has a motor can housing 120 with a pair of spaced apart ear-like motor can pivots 122. Articulate motion servo motor 124 rotates drive screw 126 that imparts the Φ articulating motion by tipping camera pivoting hub 128. The tipping motion axis 132 is established between camera hub pivot 130 that is rotatively coupled to the motor can pivot 122. Offset link 133 is coupled to drive screw 126 and converts linear motion to rotational motion about tipping motion axis 132.

Motor can housing 120 also contains camera pan/rotate servo motor 134 that imparts the θ degree of motion on camera head 66, as shown in FIG 11. Servo motor 134 drives bevel gear train 136, which in turn includes the driven bevel gear that is rotatively captured within camera pivoting hub 128, for in turn rotating the rotating hub 129. The rotating hub 129 is rigidly coupled to the camera head telescoping extension 84. Camera tip telescoping extensions 84 and 86 are extended and retracted in the E motion degree by extension servo motor 140, that in turn engages linear drive screw 142. The drive screw 142 includes drive pulley 144, over which passes tensioned cable 146. Slave pulley 148 is attached to camera head 88 and is also coupled to cable 146. Coil spring 150 is interposed between camera head 88 and rotating hub 129, and biases them away from each other, thereby tensioning cable 146. It follows that selective translation of the drive screw 142 by the extension servo motor 140 moves the camera head 88 to the left and right in the figure (motion E).

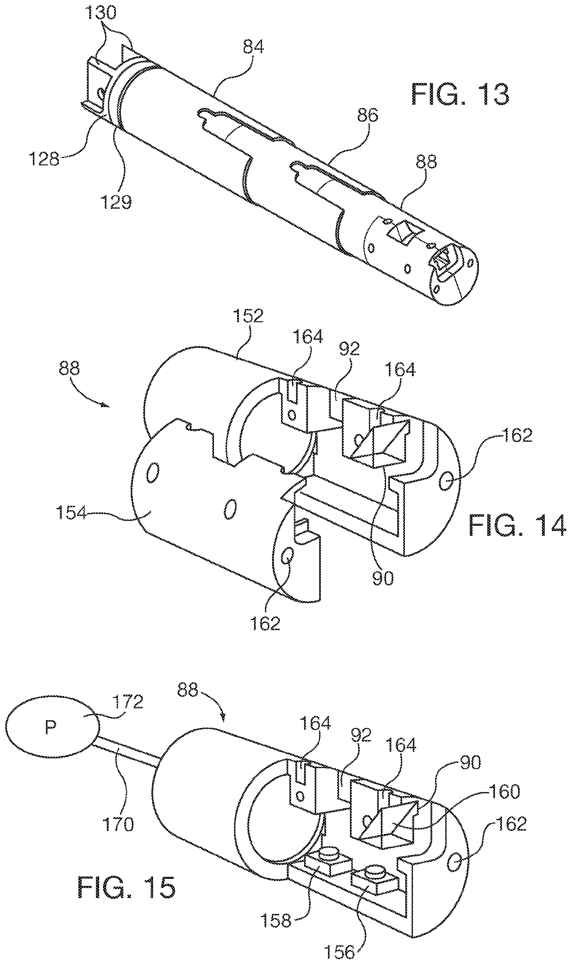

FIGs. 13-15 show the camera head 88 that has a clamshell construction with camera head housing 152 and selectively removable cover 15. Camera 156 has a field of view (FOV) through "camera 1" port 90, extending along the central axis of the camera head 88. Camera 158 has a field of view (FOV) through "camera 2" port 92, extending laterally or normal to the central axis of the camera head 88. Camera 156 generates its image through prism 160. Cameras 156, 158 are known auto-focusing USB cameras of the type routinely used with personal computers. Light emitting diodes (LEDs) 162 and 164 provide illumination for the cameras 156, 158 during internal inspection of power generation machinery.

Inspection scope 60 is externally cooled by a cooling air line 170 and pressurized cooling air source 172 (e.g., compressed air), schematically shown in FIG. 15. Cooling air passes through the scope 60 to transfer heat away from the instrument, where it exhausts through gaps within the scope outer surface, such as the camera ports 90, 92, the prism 160, around the cameras 156, 158 and the LEDs 162, 164. Those gaps effectively function as cooling air exhaust ports. Cooling air exhausting the various cooling ports helps transfer heat out of the scope 60 and helps create a thermal barrier around the camera head 88 that is relatively cooler than the not fully cooled turbine 30 internal temperature. In this manner the inspection scope 60 can be inserted into still hot shut-down turbine many hours before it cools to ambient air temperature. In this manner inspection can be initiated many hours - and possibly days - earlier than was permissible with known inspection systems. In this manner an inspection process can be initiated and completed earlier in a turbine service period than was possible in the past, possibly reducing the aggregate maintenance cycle time.

### Camera Inspection Scope Control and Operation

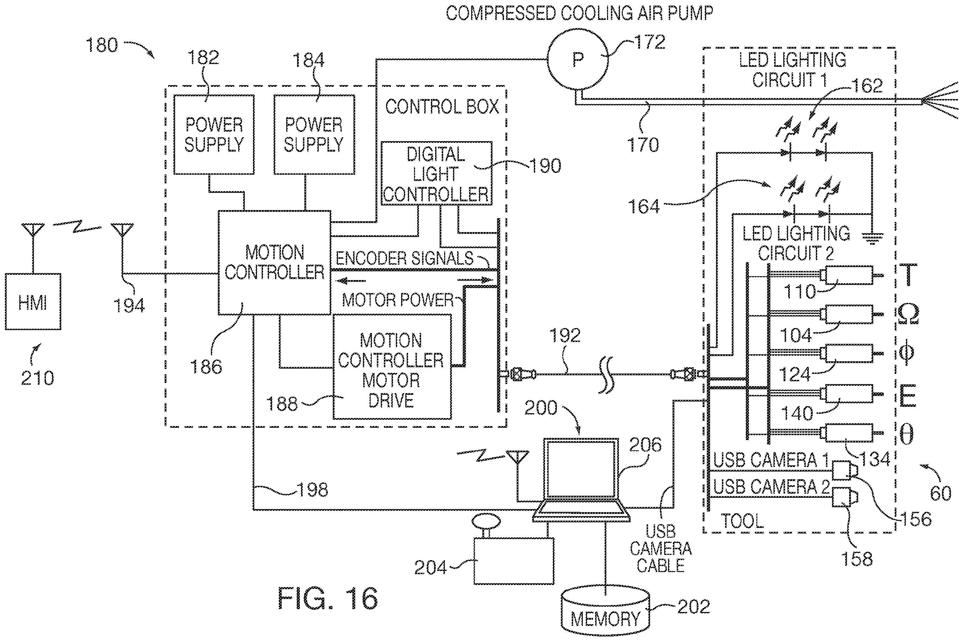

Inspection scope 60 positioning along its five degrees of motion are accomplished by energizing the five previously described precision motion control servo motors 104 (Ω), 110 (T), 124 (θ), 124 (Φ), and 140 (E). The servo motors have associated encoders that provide motor position information feedback for use by the controller of a known motion control system. FIG. 16 is block diagram of an exemplary motion control system of the present invention. The previously described inspection scope 60 hardware is designated by dashed line 60, and is in communication with control box 180, also designated by dashed line, by way of known communication pathways, such as multi-pathway cable 192 and a USB camera cable.

Control box 180 includes first and second power supplies 182, 184 for powering motion controller 186 and motion controller motor drive 188. All of components 182-188 are of known design utilized for industrial motion control systems. The motion controller 186 issues commands to the motion controller motor drive 188 for energizing and reversing the inspection scope 60 servo motors 104 (Ω), 110 (T), 124 (θ), 124 (Φ), and 140 (E). For brevity all such motors are collectively referred to as "servo motors". The respective servo motors have associated encoders that generate encoder signals indicative of the scope position within its respective range of motion. For example, the encoder associated with servo motor 104 generates a rotational position signal indicative of the gross rotational position (Ω) of the extension tube portion 62. Position signal information from each encoder is accessed by the motion controller 186. The motion controller 186 correlates respective motor encoder signals with inspection scope 60 spatial position. Digital light controller 190 controls the LED 162, 164 luminal output and on/off, and communicates with the motion controller 186. The motion controller 186 also controls cooling air flow into and through the inspection scope 60, for example flow rate out the cooling port 174.

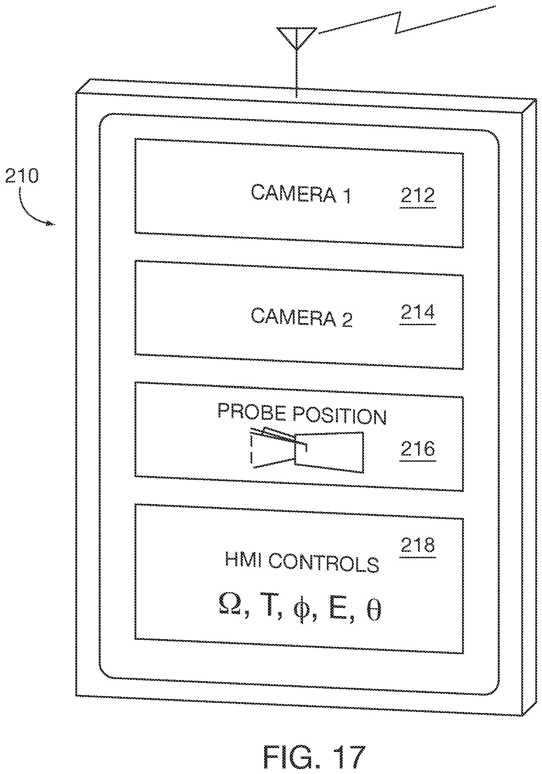

Motion controller 186 has an optional wireless communication capability 194. Hardwired data pathway 198, for example a cable transmitting communications signals in conformity with Ethernet protocol, is in communication with a host controller 200. An exemplary host controller 200 is a personal computer with internal memory capacity and if desired external memory 202. The host controller computer 200 also receives and processes image data from camera 156 (USB Camera 1) and from camera 158 (USB Camera 2), that may be processed. The computer 200 may archive or otherwise store raw or processed image data in memory 202. Inspection scope 60 can be positioned under human command and control, such as via joystick 204 and/or HMI viewing/touch screen 206. Images from the cameras 156, 158 can be viewed by HMI viewing screen 206. Optionally the computer 200 may have wireless communication capability, for example to communicate with other computers, including for example a tablet computer 210 with HMI, such as for example a tablet computer. FIG. 17 shows an exemplary tablet computer HMI display screen including Camera 1 image display 212, Camera 2 image display 214, probe position information display 216 and an HMI control interface 218 for manipulating inspection scope 60 position. The tablet computer 210 may have direct communications capability with the motion controller 186, without the need to communicate through the host controller computer 200.

### Blade/Vane Inspection Scope

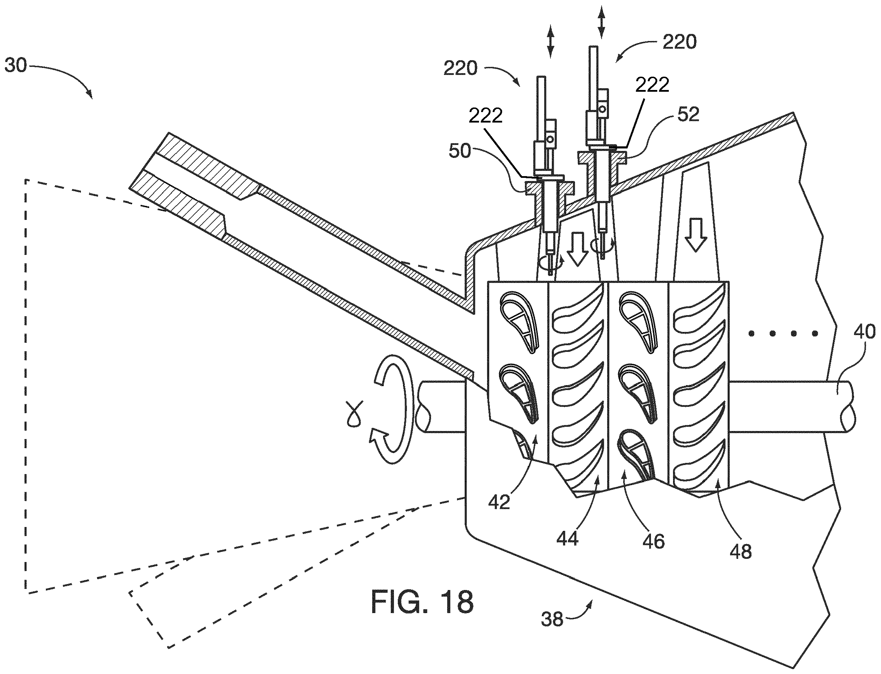

A blade/vane inspection scope 220 embodiment is shown in FIGs. 18-20. This embodiment is particularly suitable for inspection within the confines of a gas turbine 30 turbine section 38, between rows of rotating blades and stationary vanes. FIG. 18 shows a pair of inspection scopes 220 respectively mounted to each of the Row 1 inspection port 50 and Row 2 inspection port 52. However, at the discretion of an inspection team a single inspection scope 220 may be mounted to a selected inspection port or more than two inspection scopes 220 may be mounted to the turbine 30 simultaneously during an inspection procedure. Similarly, an inspection team at its discretion may also operate one or more of the inspection scope 60 embodiments simultaneously with or without the inspection scope 220 embodiment in any inspection procedure.

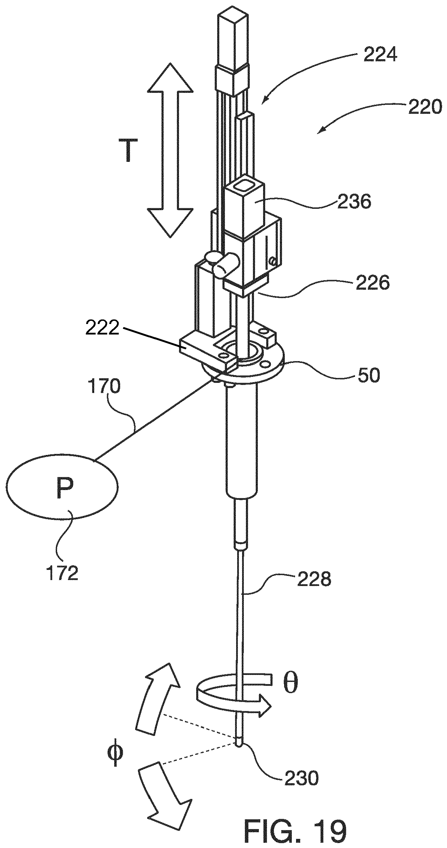

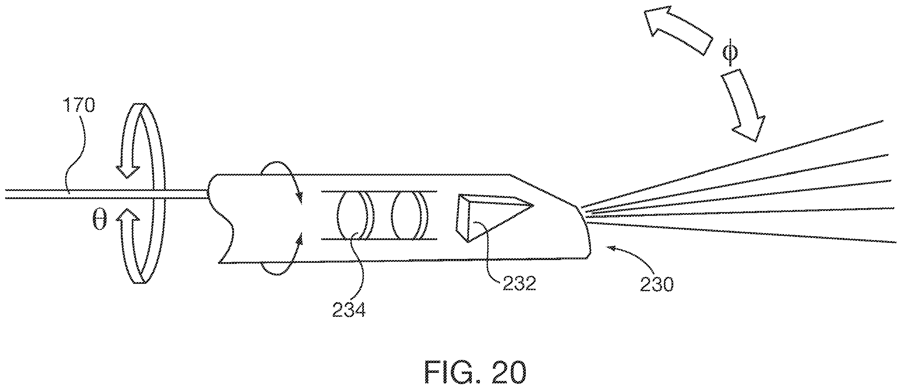

As shown in FIGs. 18 and 19 the inspection scope 220 embodiment is mounted to a gas turbine inspection port (here a Row 1 inspection port 50) by mounting flange 222. Linear drive 224 with an associated servo motor and encoder translates the inspection scope in the telescoping extension position motion degree T. Rotational drive 226 with an associated servo motor and encoder rotates the inspection scope in the camera rotate/pan motion degree θ. Bore scope 228 is mechanically coupled to the linear drive 224 and rotational drive 226, and has a camera head 230 that captures images within its field of view (FOV). As shown in FIG. 20, the camera head 230 includes a pivoting prism 232 whose motion in the articulation Φ motion degree is imparted by an associated servo motor and encoder. The bore scope 228 is of known construction and includes fiber optic lenses 234 and auxiliary external lighting (not shown) that illuminate and transmit images within the camera head field of view to camera 236. The camera 236 may be an auto focusing USB camera that is coupled to a motion control system, such as shown in FIG. 16. General motion control and positioning of the inspection scope 220 along its motion degrees Φ, θ and T and camera image capture are performed as previously described with respect to the inspection scope embodiment 60.

The inspection scope 220 includes an external cooling system for inspection within a turbine 30 cool-down phase when the turbine section 38 still has an elevated temperature of up to approximately 150°C. As was described with respect to the inspection scope embodiment 60, the cooling system includes an air line 170 running in parallel to or within the bore scope 228 that expels cooling air obtained from a cooling air source 172 through one or more functional cooling air exhaust ports, such as around the camera head 230.

The three motion degrees Φ, θ and T in the blade/vane inspection scope 220 embodiment are sufficient to obtain complete images of the leading or trailing sides of all rotating turbine blades within a given row while the turbine rotor is spinning in turning gear mode. For example in FIG. 18 the leading side of each of the Row 1 turbine blades 44 can be inspected by the inspection scope 220 that is positioned in inspection port 50. As each individual blade rotates within the camera head 230 field of view its image is captured by the associated control system. A partial or full series of blade images can be obtained during a single rotor 40 rotation while the turbine 30 is in turning gear mode. A single camera head 230 field of view may not capture the full radial length an area of interest on a turbine blade. By repositioning the camera head tilt angle Φ or inserting/retracting the bore scope 228 along the T freedom degree the camera field of view can be repositioned radially along the blade or vane length. Images captured at different blade/vane radial positions can be combined to create an aggregate image of the entire blade. Similarly, an image of the trailing edge of each blade 44 in Row 1 can be captured by positioning an inspection scope 220 in turbine inspection port 52, as was done for the leading edges.

### Exemplary Turbine Inspection Procedures

The camera inspection system of the present invention provides the capability of automatic positioning and image capture of an inspection camera field of view relative to an area of interest with a turbine, such as a gas turbine, without human intervention. After inspection scope positioning sequence information is provided to the system, subsequent inspections are repeatable by different inspection teams, regardless of their individual inspection scope positioning skill or inspection speed. Automated inspections can be completed quicker, with less likelihood of human-created errors, as compared to known inspection procedures. Further explanation of the inspection methods of the present invention will be with reference to inspection of an exemplary industrial gas turbine.

Inspection scope positioning sequence information may be obtained by installing an inspection scope embodiment of the present invention on a selected inspection port and orienting all controlled motions to an initialized or "start" position. A human inspector guides the inspection scope through the control system HMI, e.g., by use of a joystick or touch screen pad, through a navigated path within the turbine that is recorded within one or both the control system controllers/host computer. The navigation path is chosen to orient the inspection scope camera head field of view within area of interest without causing undesirable impact of the scope with turbine internal components.

The control system retains the navigation path information from the initial human-controlled inspection and can subsequently repeat the inspection scope positioning sequence for future inspection cycles on the same turbine or other turbines having the same internal structure. For example, a navigation path sequence can be performed on a single test turbine and the sequence can be communicated to other remote sites for use by inspection teams inspecting the same structure gas turbine located at that site. In the field, an inspection team may be concerned that a different gas turbine may have variations in internal structure from the original gas turbine. The field team may review the stored navigation path individual step by step, with local override to accommodate any path variations needed for the field installation turbine to perform an inspection, or may choose to program a new navigation path dedicated to the field location turbine.

Navigation paths alternatively can be determined in virtual space by a human inspector simulating a navigation path in a simulated turbine and recording the path for subsequent use in actual turbine inspections. As another alternative, a scope inspection simulation program can prepare a suggested inspection navigation path for review and approval by a human inspector.

A navigation path sequence can move the camera head field of view from one position of interest to another position of interest. For example, an inspection scope can be affixed to a combustor inspection port, whereupon the inspection system can capture and record images of internal components within the combustor, then move to the leading edge of Row 1 vanes, pass through those vanes and inspect the leading edge of Row 1 blades. If the turbine is in turning gear mode the camera head can record sequentially the same image for each blade during a single rotor rotation.

When in a navigation path position the camera head may be repositioned to obtain image information from different camera fields of view from the same reference point. The various images taken from the same reference point can be combined to obtain a composite or "stitched" view of the structural elements, or to take a virtual "tour" of any or all portions of the turbine interior.

Rather than move the inspection scope camera head field of view from one position to another, it is also possible to move the turbine component areas of interest within the field of view of a stationary camera head. For example, an inspection scope inserted between blade and vane rows can capture an image of each blade rotating within the camera field of view, whether the turbine is in turning gear mode or whether an operator manually "bumps" each blade of a completely stopped turbine rotor sequentially in front of the camera head.

Although various embodiments which incorporate the teachings of the present invention have been shown and described in detail herein, those skilled in the art can readily devise many other varied embodiments that still incorporate these teachings. For example, "optical images" of turbine internal component can be obtained in the visible light spectrum or in the infrared spectrum. The inspection scope motion degrees do not have to be limited to those exemplary motions enabled by the servo motors 104 (Ω), 110 (T), 124 (θ), 124 (Φ), and 140 (E). Scope motion does not have to be imparted by servo motors, and can include known alternative pneumatic or other motion control systems.

## Claims

1. A system for internal inspection of a gas turbine, comprising:
a mounting flange (112, 222) for affixation to a gas turbine inspection port (36, 50, 52);
an inspection scope (60, 220) having an elongated body defining a central axis, a proximal end coupled to the mounting flange, and a distal end for insertion within a gas turbine inspection port;
a linear drive (106, 224) for translating the inspection scope along its central axis, coupled thereto;
a rotational drive (102, 226) for rotating the inspection scope about its central axis, coupled thereto;
a camera head (66, 230), having a field of view, coupled to the inspection scope body distal end;
a camera (156, 158, 236) coupled to the inspection scope, for capturing an image transmitted by the camera head; and
a control system (180), coupled to the linear and rotational drives and the camera, for automatically positioning the inspection scope and field of view along a pre-designated navigation path within the gas turbine (30) to an internal area of interest and for capturing a camera image thereof without human intervention.

2. The system of claim 1, wherein the control system (180) automatically and sequentially positions the field of view to plural areas of interest along the navigation path and captures respective images thereof.

3. The system of claim 2, wherein the inspection scope (60, 220) remains static between sequential positions, the plural areas of interest within the gas turbine (30) move along the navigation path, and the control system (180) causes the camera (156, 158, 236) to capture images of the plural areas of interest when they are within the field of view.

4. The system of claim 3, wherein the plural areas of interest comprise turbine blades (44, 48).

5. The system of claim 2, wherein images of plural areas of interest are combined to produce a composite image.

6. The system of claim 5, further comprising combining images selected from the group consisting of:
combining images of plural areas of interest and producing a composite image; and
combining images taken at plural times and overlaying the images.

7. The system of claim 1, wherein the inspection scope (60, 220) is a bore scope incorporating the camera head (66, 230) therein.

8. The system of claim 1, further comprising an articulation drive (126, 232), coupled to the camera head (66, 230) and the control system (180), for articulating the camera head field of view relative to the inspection scope central axis.

9. The system of claim 1, further comprising a cooling system (170, 172) coupled to the inspection scope (60, 220) for routing pressurized cooling gas through the inspection scope.

10. The system of claim 1, further comprising an illumination system (162, 164) coupled to the camera head (66, 230) for illuminating the camera head field of view.

11. A method for internal inspection of a gas turbine, comprising the steps of:
providing an internal inspection system having:
a mounting flange (112, 222) for affixation to a gas turbine inspection port (36, 50, 52);
an inspection scope (60, 220) having an elongated body defining a central axis, a proximal end coupled to the mounting flange, and a distal end for insertion within a gas turbine inspection port;
a linear drive (106, 224) for translating the inspection scope along its central axis, coupled thereto;
a rotational drive (102, 226) for rotating the inspection scope about its central axis, coupled thereto;
a camera head (66, 230), having a field of view, coupled to the inspection scope body distal end;
a camera (156, 158, 236) coupled to the inspection scope, for capturing an image transmitted by the camera head; and
a control system (180), coupled to the linear and rotational drives and the camera, for automatically positioning the inspection scope and field of view along a pre-designated navigation path within the gas turbine (30) to an internal area of interest and for capturing a camera image thereof without human intervention;
affixing the mounting flange to a gas turbine inspection port and inserting the inspection scope distal end therein;
providing the navigation path to the control system;
inspecting the gas turbine by automatically positioning the inspection scope and field of view along the navigation path with the control system and capturing a camera image thereof without human intervention; and
storing the camera image for review.

12. The method of claim 11, wherein during the inspecting step the control system (180) automatically and sequentially positions the field of view to plural areas of interest along the navigation path and captures respective images thereof.

13. The method of claim 12, wherein the sequential positioning and image capture steps within the inspecting step allow human intervention in at least one of the steps before proceeding to the next step along the navigation path.

14. The method of claim 12, further comprising during the inspecting step:
maintaining the inspection scope (60, 220) in a static position with the control system (180);
moving the plural areas of interest within the gas turbine (30) along the navigation path; and
capturing images of the plural areas of interest as they move into the field of view, with the camera (156, 158, 236) and the control system.

15. The method of claim 14, wherein the plural areas of interest are turbine blades (44, 48) mounted on a turbine rotor (40) being rotated in turning gear mode.

16. The method of claim 12, further comprising combining images selected from the group consisting of:
combining images of plural areas of interest and producing a composite image; and
combining images taken at plural times and overlaying the images.

17. A method for inspecting a turbine section of an industrial gas turbine, comprising the steps of:
shutting down a gas turbine operation;
providing an internal inspection system having:
a mounting flange (222) for affixation to a turbine section inspection port (50, 52);
an inspection scope (220) having an elongated body defining a central axis, a proximal end coupled to the mounting flange, and a distal end for insertion within a gas turbine inspection port;
a linear drive (224) for translating the inspection scope along its central axis, coupled thereto;
a rotational drive (226) for rotating the inspection scope about its central axis, coupled thereto;
a camera head (230), having a field of view, coupled to the inspection scope body distal end;
a camera (236) coupled to the inspection scope, for capturing an image transmitted by the camera head; and
a control system (180), coupled to the linear and rotational drives and the camera, for automatically positioning the inspection scope and field of view along a pre-designated navigation path within the gas turbine (30) to an internal area of interest and for capturing a camera image thereof without human intervention;
cooling the gas turbine to an internal temperature of less than 150°C (300°F);
affixing the mounting flange to a turbine section inspection port located between blade and vane rows (42, 44, 46, 48);
providing the navigation path to the control system;
inspecting the turbine section (38) by automatically positioning the inspection scope and field of view along the navigation path with the control system and capturing a camera image thereof without human intervention; and
storing the camera image for review.

18. The method of claim 17 for inspecting a row of turbine blades respectively having first and second sides, comprising the steps of:
operating the gas turbine (30) by rotating the rotor (40) in turning gear mode, and thereby rotating the blades (44) ;
affixing the mounting flange (222) to an inspection port (50) proximal said first side of the turbine blades;
providing a first navigation path to the control system (180) for orienting the field of view facing said first side of the turbine blades;
inspecting said first side of the rotating turbine blades by automatically positioning the inspection scope (220) and field of view along the navigation path with the control system and capturing a camera image of said first side of at least a plurality of turbine blades without human intervention;
affixing the mounting flange to an inspection port (52) proximal the second side of the turbine blades;
providing a second navigation path to the control system for orienting the field of view facing said second side of the turbine blades;
inspecting said second side of the rotating turbine blades by automatically positioning the inspection scope and field of view along the navigation path with the control system and capturing a camera image of said second side of at least a plurality of turbine blades without human intervention; and
storing the blade first and second side camera images for review.

19. The method of claim 17 for inspecting a row of turbine blades respectively having a radial length longer than the camera head field of view, comprising the steps of:
operating the gas turbine (30) by rotating the rotor (40) in turning gear mode, and thereby rotating the blades (44) ;
affixing the mounting flange (222) to an inspection port (50) proximal a side of the turbine blades;
providing a navigation path having first and second positions to the control system (180), for orienting the camera head field of view respectively facing first and second adjoining radial lengths of the turbine blades;
inspecting said first radial length of the rotating turbine blades by automatically positioning the inspection scope (220) and field of view at the navigation path first position with the control system and capturing a camera image of said first length of at least a plurality of turbine blades without human intervention;
inspecting said second radial length of the rotating turbine blades by automatically positioning the inspection scope and field of view at the navigation path second position with the control system and capturing a camera image of said second length of at least the same plurality of turbine blades without human intervention; and
storing the blade first and second length camera images for review, and if desired, combining corresponding first and second images for at least one turbine blade to form a composite image thereof.

20. The method of claim 19, wherein the inspection system further comprises an articulation drive (232), coupled to the camera head (230) and the control system (180), for articulating the camera head field of view relative to the inspection scope central axis, wherein the control system respectively articulates the camera head in first and second articulation positions that correspond with the navigation path respective first and second positions.

## Patentansprüche

1. System für die Innenprüfung einer Gasturbine, das Folgendes umfasst:
einen Befestigungsflansch (112, 222) zum Fixieren an einer Gasturbineninspektionsöffnung (36, 50, 52),
ein Prüfendoskop (60, 220) mit einem länglichen Körper, der eine Mittelachse definiert, einem mit dem Befestigungsflansch gekoppelten, proximalen Ende und einem distalen Ende zum Einführen in eine Gasturbineninspektionsöffnung,
einen damit gekoppelten Linearantrieb (106, 224) zum Verschieben des Prüfendoskops entlang seiner Mittelachse, einen damit gekoppelten Drehantrieb (102, 226) zum Drehen des Prüfendoskops um seine Mittelachse,
einen Kamerakopf (66, 230) mit einem Sichtfeld, der mit dem distalen Ende des Prüfendoskopkörpers gekoppelt ist,
eine mit dem Prüfendoskop gekoppelte Kamera (156, 158, 236) zum Aufnehmen eines von dem Kamerakopf übertragenen Bildes,
ein mit dem Linear- und dem Drehantrieb und der Kamera gekoppeltes Steuersystem (180) zum automatischen Anordnen des Prüfendoskops und des Sichtfelds entlang eines vorgegebenen Navigationswegs innerhalb der Gasturbine (30) auf einen interessierenden Innenbereich und zum Aufnehmen eines Kamerabilds davon ohne menschliches Eingreifen.

2. System nach Anspruch 1, wobei das Steuersystem (180) das Sichtfeld automatisch anordnet und sequentiell auf mehrere interessierende Bereiche entlang des Navigationswegs richtet und jeweilige Bilder davon aufnimmt.

3. System nach Anspruch 2, wobei sich das Prüfendoskop (60, 220) zwischen sequentiellen Positionen nicht bewegt, sich die mehreren interessierenden Bereich innerhalb der Gasturbine (30) den Navigationsweg entlang bewegen und das Steuersystem (180) die Kamera (156, 158, 236) dazu veranlasst, Bilder von den mehreren interessierenden Bereichen aufzunehmen, wenn sie sich im Sichtfeld befinden.

4. System nach Anspruch 3, wobei die mehreren interessierenden Bereiche Turbinenlaufschaufeln (44, 48) umfassen.

5. System nach Anspruch 2, wobei Bilder von mehreren interessierenden Bereichen zu einem zusammengesetzten Bild kombiniert sind.

6. System nach Anspruch 5, das ferner ein Kombinieren von Bildern umfasst, das aus der Gruppe ausgewählt ist, die aus Folgendem besteht:
Kombinieren von Bildern von mehreren interessierenden Bereichen und Erzeugen eines zusammengesetzten Bilds und
Kombinieren von Bildern, die zu mehreren Zeitpunkten aufgenommen wurden, und Überlagern der Bilder.

7. System nach Anspruch 1, wobei es sich bei dem Prüfendoskop (60, 220) um ein Boroskop handelt, das den Kamerakopf (66, 230) enthält.

8. System nach Anspruch 1, das ferner einen mit dem Kamerakopf (66, 230) und dem Steuersystem (180) gekoppelten Gelenkantrieb (126, 232) zum gelenkigen Bewegen des Sichtfelds des Kamerakopfes in Bezug auf die Mittelachse des Prüfendoskops umfasst.

9. System nach Anspruch 1, das ferner ein mit dem Prüfendoskop (60, 220) gekoppeltes Kühlsystem (170, 172) zum Leiten von unter Druck stehendem Kühlgas durch das Prüfendoskop umfasst.

10. System nach Anspruch 1, das ferner ein mit dem Kamerakopf (66, 230) gekoppeltes Beleuchtungssystem (162, 164) zum Beleuchten des Sichtfelds des Kamerakopfes umfasst.

11. Verfahren für die Innenprüfung einer Gasturbine, das folgende Schritte umfasst:
Bereitstellen eines Systems für die Innenprüfung mit:
einem Befestigungsflansch (112, 222) zum Fixieren an einer Gasturbineninspektionsöffnung (36, 50, 52),
einem Prüfendoskop (60, 220) mit einem länglichen Körper, der eine Mittelachse definiert, einem mit dem Befestigungsflansch gekoppelten, proximalen Ende und einem distalen Ende zum Einführen in eine Gasturbineninspektionsöffnung,
einem damit gekoppelten Linearantrieb (106, 224) zum Verschieben des Prüfendoskops entlang seiner Mittelachse,
einem damit gekoppelten Drehantrieb (102, 226) zum Drehen des Prüfendoskops um seine Mittelachse,
einem Kamerakopf (66, 230) mit einem Sichtfeld, der mit dem distalen Ende des Prüfendoskopkörpers gekoppelt ist,
einer mit dem Prüfendoskop gekoppelten Kamera (156, 158, 236) zum Aufnehmen eines von dem Kamerakopf übertragenen Bildes,
einem mit dem Linear- und dem Drehantrieb und der Kamera gekoppelten Steuersystem (180) zum automatischen Anordnen des Prüfendoskops und des Sichtfelds entlang eines vorgegebenen Navigationswegs innerhalb der Gasturbine (30) auf einen interessierenden Innenbereich und zum Aufnehmen eines Kamerabilds davon ohne menschliches Eingreifen,
Fixieren des Befestigungsflansches an einer Gasturbineninspektionsöffnung und Einführen des distalen Endes des Prüfendoskop in die Öffnung,
Bereitstellen des Navigationswegs für das Steuersystem,
Prüfen der Gasturbine durch automatisches Anordnen des Prüfendoskops und des Sichtfelds entlang des Navigationswegs mit dem Steuersystem und Aufnehmen eines Kamerabilds davon ohne menschliches Eingreifen und
Speichern des Kamerabilds zur Überprüfung.

12. Verfahren nach Anspruch 11, wobei das Steuersystem (180) beim Prüfen das Sichtfeld automatisch anordnet und sequentiell auf mehrere interessierende Bereiche entlang des Navigationswegs richtet und jeweilige Bilder davon aufnimmt.

13. Verfahren nach Anspruch 12, wobei das sequentielle Anordnen und das Aufnehmen von Bildern beim Prüfen bei zumindest einem der Schritte menschliches Eingreifen zulassen, bevor zum nächsten Schritt entlang des Navigationswegs übergegangen wird.

14. Verfahren nach Anspruch 12, das beim Prüfen ferner Folgendes umfasst:
Halten des Prüfendoskops (60, 220) in einer festen Position mit dem Steuersystem (180),
Bewegen der mehreren interessierenden Bereiche innerhalb der Gasturbine (30) entlang des Navigationswegs und
Aufnehmen von Bildern von den mehreren interessierenden Bereichen, wenn sie ins Sichtfeld kommen, mit der Kamera (156, 158, 236) und dem Steuersystem.

15. Verfahren nach Anspruch 14, wobei es sich bei den mehreren interessierenden Bereichen um Turbinenlaufschaufeln (44, 48) handelt, die an einem Turbinenrotor (40) angebracht sind, der im Drehwerksbetrieb gedreht wird.

16. Verfahren nach Anspruch 12, das ferner ein Kombinieren von Bildern umfasst, das aus der Gruppe ausgewählt ist, die aus Folgendem besteht:
Kombinieren von Bildern von mehreren interessierenden Bereichen und Erzeugen eines zusammengesetzten Bilds und
Kombinieren von Bildern, die zu mehreren Zeitpunkten aufgenommen wurden, und Überlagern der Bilder.

17. Verfahren zum Prüfen eines Turbinenabschnitts einer Industriegasturbine, das folgende Schritte umfasst:
Abfahren einer Gasturbine,
Bereitstellen eines Systems für die Innenprüfung mit:
einem Befestigungsflansch (222) zum Fixieren an einer Inspektionsöffnung (50, 52) eines Turbinenabschnitts,
einem Prüfendoskop (220) mit einem länglichen Körper, der eine Mittelachse definiert, einem mit dem Befestigungsflansch gekoppelten, proximalen Ende und einem distalen Ende zum Einführen in eine Gasturbineninspektionsöffnung,
einem damit gekoppelten Linearantrieb (224) zum Verschieben des Prüfendoskops entlang seiner Mittelachse,
einem damit gekoppelten Drehantrieb (226) zum Drehen des Prüfendoskops um seine Mittelachse,
einem Kamerakopf (230) mit einem Sichtfeld, der mit dem distalen Ende des Prüfendoskopkörpers gekoppelt ist,
einer mit dem Prüfendoskop gekoppelten Kamera (236) zum Aufnehmen eines von dem Kamerakopf übertragenen Bildes,
einem mit dem Linear- und dem Drehantrieb und der Kamera gekoppelten Steuersystem (180) zum automatischen Anordnen des Prüfendoskops und des Sichtfelds entlang eines vorgegebenen Navigationswegs innerhalb der Gasturbine (30) auf einen interessierenden Innenbereich und zum Aufnehmen eines Kamerabilds davon ohne menschliches Eingreifen,
Kühlen der Gasturbine auf eine Innentemperatur von weniger als 150°C (300°F),
Fixieren des Befestigungsflansches an einer Inspektionsöffnung des Turbinenabschnitts, die sich zwischen Lauf- und Leitschaufelreihen (42, 44, 46, 48) befindet,
Bereitstellen des Navigationswegs für das Steuersystem,
Prüfen des Turbinenabschnitts (38) durch automatisches Anordnen des Prüfendoskops und des Sichtfelds entlang des Navigationswegs mit dem Steuersystem und Aufnehmen eines Kamerabilds davon ohne menschliches Eingreifen und
Speichern des Kamerabilds zur Überprüfung.

18. Verfahren nach Anspruch 17 zum Prüfen einer Reihe von Turbinenlaufschaufeln mit jeweils einer ersten und einer zweiten Seite, das folgende Schritte umfasst:
Betreiben der Gasturbine (30) durch Drehen des Rotors (40) im Drehvorrichtungsmodus und dadurch Drehen der Laufschaufeln (44),
Fixieren des Befestigungsflansches (222) an einer Inspektionsöffnung (50) in der Nähe der ersten Seite der Turbinenlaufschaufeln,
Bereitstellen eines ersten Navigationswegs für das Steuersystem (180) zum Ausrichten des der ersten Seite der Turbinenlaufschaufeln zugewandten Sichtfelds,
Prüfen der ersten Seite der sich drehenden Turbinenlaufschaufeln durch automatisches Anordnen des Prüfendoskops (220) und des Sichtfelds entlang des Navigationswegs mit dem Steuersystem und Aufnehmen eines Kamerabilds von der ersten Seite von zumindest mehreren Turbinenlaufschaufeln ohne menschliches Eingreifen,
Fixieren des Befestigungsflansches an einer Inspektionsöffnung (52) in der Nähe der zweiten Seite der Turbinenlaufschaufeln,
Bereitstellen eines zweiten Navigationswegs für das Steuersystem zum Ausrichten des der zweiten Seite der Turbinenlaufschaufeln zugewandten Sichtfelds,
Prüfen der zweiten Seite der sich drehenden Turbinenlaufschaufeln durch automatisches Anordnen des Prüfendoskops und des Sichtfelds entlang des Navigationswegs mit dem Steuersystem und Aufnehmen eines Kamerabilds von der zweiten Seite von zumindest mehreren Turbinenlaufschaufeln ohne menschliches Eingreifen und
Speichern der Kamerabilder von der ersten und der zweiten Laufschaufelseite zur Überprüfung.

19. Verfahren nach Anspruch 17 zum Prüfen einer Reihe von Turbinenlaufschaufeln, die jeweils eine radiale Länge aufweisen, die größer ist als das Sichtfeld des Kamerakopfes, mit folgenden Schritten:
Betreiben der Gasturbine (30) durch Drehen des Rotors (40) im Drehvorrichtungsmodus und dadurch Drehen der Laufschaufeln (44),
Fixieren des Befestigungsflansches (222) an einer Inspektionsöffnung (50) in der Nähe einer Seite der Turbinenlaufschaufeln,
Bereitstellen eines Navigationswegs mit einer ersten und einer zweiten Position für das Steuersystem (180) zum Ausrichten des der ersten beziehungsweise der zweiten benachbarten radialen Länge der Turbinenlaufschaufeln zugewandten Sichtfelds des Kamerakopfes,
Prüfen der ersten radialen Länge der sich drehenden Turbinenlaufschaufeln durch automatisches Anordnen des Prüfendoskops (220) und des Sichtfelds an der ersten Navigationswegposition mit dem Steuersystem und Aufnehmen eines Kamerabilds von der ersten Länge von zumindest mehreren Turbinenlaufschaufeln ohne menschliches Eingreifen,
Prüfen der zweiten radialen Länge der sich drehenden Turbinenlaufschaufeln durch automatisches Anordnen des Prüfendoskops und des Sichtfelds an der zweiten Navigationswegposition mit dem Steuersystem und Aufnehmen eines Kamerabilds von der zweiten Länge von zumindest den gleichen mehreren Turbinenlaufschaufeln ohne menschliches Eingreifen und
Speichern der Kamerabilder von der ersten und der zweiten Laufschaufellänge zur Überprüfung und bei Bedarf Kombinieren des entsprechenden ersten und zweiten Bilds für mindestens eine Turbinenlaufschaufel zum Bilden eines zusammengesetzten Bilds davon.

20. Verfahren nach Anspruch 19, wobei das Prüfsystem ferner einen mit dem Kamerakopf (230) und dem Steuersystem (180) gekoppelten Gelenkantrieb (232) zum gelenkigen Bewegen des Sichtfelds des Kamerakopfes in Bezug auf die Mittelachse des Prüfendoskops umfasst, wobei das Steuersystem den Kamerakopf gelenkig in eine erste beziehungsweise eine zweite Gelenkposition bewegt, die der ersten beziehungsweise der zweiten Position im Navigationsweg entspricht.

## Revendications

1. Système d'inspection interne d'une turbine à gaz, comprenant :
une bride de montage (112, 222) à fixer sur un orifice d'inspection (36, 50, 52) de turbine à gaz ;
un endoscope d'inspection (60, 220) doté d'un corps allongé définissant un axe central, une extrémité proximale couplée à la bride de montage et une extrémité distale à insérer à l'intérieur d'un orifice d'inspection de turbine à gaz ;
un entraînement linéaire (106, 224) pour assurer la translation de l'endoscope d'inspection suivant son axe central, y couplé ;
un entraînement rotatif (102, 226) pour assurer la rotation de l'endoscope d'inspection autour de son axe central, y couplé ;
une tête (66, 230) de caméra, dotée d'un champ de vision, couplée à l'extrémité distale du corps de l'endoscope d'inspection ;
une caméra (156, 158, 236) couplée à l'endoscope d'inspection, pour prendre une image transmise par la tête de caméra, et
un système de commande (180), couplé aux entraînements linéaire et rotatif et à la caméra, pour positionner automatiquement l'endoscope d'inspection et le champ de vision suivant un trajet de navigation prédéterminé à l'intérieur de la turbine à gaz (30) jusqu'à une zone interne présentant de l'intérêt et pour en prendre une image par caméra sans intervention humaine.

2. Système selon la revendication 1, étant entendu que le système de commande (180) positionne de façon automatique et séquentielle le champ de vision jusqu'à une pluralité de zones présentant de l'intérêt en suivant le trajet de navigation et qu'il en prend des images respectives.

3. Système selon la revendication 2, étant entendu que l'endoscope d'inspection (60, 220) reste statique entre les positions séquentielles, que la pluralité de zones présentant de l'intérêt à l'intérieur de la turbine à gaz (30) se déplace suivant le trajet de navigation et que le système de commande (180) amène la caméra (156, 158, 236) à prendre des images de la pluralité de zones présentant de l'intérêt lorsqu'elles sont à l'intérieur du champ de vision.

4. Système selon la revendication 3, étant entendu que la pluralité de zones présentant de l'intérêt consiste en aubes mobiles (44, 48) de turbine.

5. Système selon la revendication 2, étant entendu que les images de la pluralité de zones présentant de l'intérêt sont combinées pour produire une image composite.

6. Système selon la revendication 5, comprenant par ailleurs une combinaison d'images sélectionnée dans le groupe constitué :
de la combinaison d'images de la pluralité de zones présentant de l'intérêt et de la production d'une image composite, et
de la combinaison d'images prises en une pluralité d'instants et de la superposition des images.

7. Système selon la revendication 1, étant entendu que l'endoscope d'inspection (60, 220) est un boroscope dans lequel la tête (66, 230) de caméra est incorporée.

8. Système selon la revendication 1, comprenant par ailleurs un entraînement d'articulation (126, 232), couplé à la tête (66, 230) de caméra et au système de commande (180), pour articuler le champ de vision de la tête de caméra par rapport à l'axe central de l'endoscope d'inspection.

9. Système selon la revendication 1, comprenant par ailleurs un système de refroidissement (170, 172) couplé à l'endoscope d'inspection (60, 220) pour acheminer du gaz de refroidissement sous pression dans l'endoscope d'inspection.

10. Système selon la revendication 1, comprenant par ailleurs un système d'éclairage (162, 164) couplé à la tête (66, 230) de caméra pour éclairer le champ de vision de la tête de caméra.

11. Procédé d'inspection interne d'une turbine à gaz, comprenant les étapes consistant :
à réaliser un système d'inspection interne comportant :
une bride de montage (112, 222) à fixer sur un orifice d'inspection (36, 50, 52) de turbine à gaz ;
un endoscope d'inspection (60, 220) doté d'un corps allongé définissant un axe central, une extrémité proximale couplée à la bride de montage et une extrémité distale à insérer à l'intérieur d'un orifice d'inspection de turbine à gaz ;
un entraînement linéaire (106, 224) pour assurer la translation de l'endoscope d'inspection suivant son axe central, y couplé ;
un entraînement rotatif (102, 226) pour assurer la rotation de l'endoscope d'inspection autour de son axe central, y couplé ;
une tête (66, 230) de caméra, dotée d'un champ de vision, couplée à l'extrémité distale du corps de l'endoscope d'inspection ;
une caméra (156, 158, 236) couplée à l'endoscope d'inspection, pour prendre une image transmise par la tête de caméra, et
un système de commande (180), couplé aux entraînements linéaire et rotatif et à la caméra, pour positionner automatiquement l'endoscope d'inspection et le champ de vision en suivant un trajet de navigation prédéterminé à l'intérieur de la turbine à gaz (30) jusqu'à une zone interne présentant de l'intérêt et pour en prendre une image par caméra sans intervention humaine ;
à fixer la bride de montage sur un orifice d'inspection de turbine à gaz et à y insérer l'extrémité distale de l'endoscope d'inspection ;
à fournir le trajet de navigation au système de commande ;
à inspecter la turbine à gaz en positionnant automatiquement l'endoscope d'inspection et le champ de vision avec le système de commande en suivant le trajet de navigation et à en prendre une image par caméra sans intervention humaine, et
à conserver l'image par caméra en vue de l'examiner.

12. Procédé selon la revendication 11, étant entendu que, pendant l'étape d'inspection, le système de commande (180) positionne de façon automatique et séquentielle le champ de vision jusqu'à une pluralité de zones présentant de l'intérêt en suivant le trajet de navigation et qu'il en prend des images respectives.

13. Procédé selon la revendication 12, étant entendu que les étapes de positionnement séquentiel et de prise d'images pendant l'étape d'inspection autorisent une intervention humaine dans au moins l'une des étapes avant de passer à l'étape suivante sur le trajet de navigation.

14. Procédé selon la revendication 12, consistant par ailleurs pendant l'étape d'inspection :
à maintenir l'endoscope d'inspection (60, 220) dans une position statique avec le système de commande (180) ;
à déplacer la pluralité de zones présentant de l'intérêt à l'intérieur de la turbine à gaz (30) en suivant le trajet de navigation, et
à prendre des images de la pluralité des zones présentant de l'intérêt à mesure qu'elles se déplacent jusque dans le champ de vision, avec la caméra (156, 158, 236) et le système de commande.

15. Procédé selon la revendication 14, étant entendu que la pluralité de zones présentant de l'intérêt consiste en aubes mobiles (44, 48) de turbine montées sur un rotor (40) de turbine que l'on fait tourner en mode vireur.

16. Procédé selon la revendication 12, comprenant par ailleurs une combinaison des images sélectionnée dans le groupe constitué :
de la combinaison d'images de la pluralité de zones présentant de l'intérêt et de la production d'une image composite, et
de la combinaison d'images prises en une pluralité d'instants et de la superposition des images.

17. Procédé d'inspection d'une section de turbine d'une turbine à gaz industrielle, comprenant les étapes consistant :
à arrêter le fonctionnement d'une turbine à gaz ;
à réaliser un système d'inspection interne comportant :
une bride de montage (222) à fixer sur un orifice d'inspection (50, 52) de section de turbine ;
un endoscope d'inspection (220) doté d'un corps allongé définissant un axe central, une extrémité proximale couplée à la bride de montage et une extrémité distale à insérer à l'intérieur d'un orifice d'inspection de turbine à gaz ;
un entraînement linéaire (224) pour assurer la translation de l'endoscope d'inspection en suivant son axe central, y couplé ;
un entraînement rotatif (226) pour assurer la rotation de l'endoscope d'inspection autour de son axe central, y couplé ;
une tête (230) de caméra, dotée d'un champ de vision, couplée à l'extrémité distale du corps de l'endoscope d'inspection ;
une caméra (236) couplée à l'endoscope d'inspection, pour prendre une image transmise par la tête de caméra, et
un système de commande (180), couplé aux entraînements linéaire et rotatif et à la caméra, pour positionner automatiquement l'endoscope d'inspection et le champ de vision en suivant un trajet de navigation prédéterminé à l'intérieur de la turbine à gaz (30) jusqu'à une zone interne présentant de l'intérêt et pour en prendre une image par caméra sans intervention humaine ;
à refroidir la turbine à gaz jusqu'à une température interne inférieure à 150 °C (300 °F) ;
à fixer la bride de montage sur un orifice d'inspection de section de turbine situé entre des rangées d'aubes mobiles et d'aubes fixes (42, 44, 46, 48) ;
à fournir le trajet de navigation au système de commande ;
à inspecter la section (38) de turbine en positionnant automatiquement l'endoscope d'inspection et le champ de vision de la caméra avec le système de commande en suivant le trajet de navigation et à en prendre une image par caméra sans intervention humaine, et
à conserver l'image par caméra en vue de l'examiner.

18. Procédé selon la revendication 17 servant à inspecter une rangée d'aubes mobiles de turbine comportant, respectivement, des premier et deuxième côtés, comprenant les étapes consistant :
à faire fonctionner la turbine à gaz (30) en faisant tourner le rotor (40) en mode vireur et, moyennant quoi, à faire tourner les aubes mobiles (44) ;
à fixer la bride de montage (222) sur un orifice d'inspection (50) à proximité dudit premier côté des aubes mobiles de turbine ;
à fournir un premier trajet de navigation au système de commande (180) pour orienter le champ de vision face audit premier côté des aubes mobiles de turbine ;
à inspecter ledit premier côté des aubes mobiles de turbine en rotation en positionnant automatiquement l'endoscope d'inspection (220) et le champ de vision avec le système de commande en suivant le trajet de navigation et à prendre une image par caméra dudit premier côté d'au moins une pluralité d'aubes mobiles de turbine sans intervention humaine ;
à fixer la bride de montage sur un orifice d'inspection (52) à proximité du deuxième côté des aubes mobiles de turbine ;
à fournir un deuxième trajet de navigation au système de commande pour orienter le champ de vision face audit deuxième côté des aubes mobiles de turbine ;
à inspecter ledit deuxième côté des aubes mobiles de turbine en rotation en positionnant automatiquement l'endoscope d'inspection et le champ de vision avec le système de commande en suivant le trajet de navigation et à prendre une image par caméra dudit deuxième côté d'au moins une pluralité d'aubes mobiles de turbine sans intervention humaine, et
à conserver les images par caméra des premier et deuxième côtés d'aubes mobiles pour les examiner.

19. Procédé selon la revendication 17 servant à inspecter une rangée d'aubes mobiles de turbine possédant respectivement une longueur radiale plus grande que le champ de vision de la tête de caméra, comprenant les étapes consistant :
à faire fonctionner la turbine à gaz (30) en faisant tourner le rotor (40) en mode vireur et, moyennant quoi, à faire tourner les aubes mobiles (44) ;
à fixer la bride de montage (222) sur un orifice d'inspection (50) à proximité d'un côté des aubes mobiles de turbine ;
à fournir au système de commande (180) un trajet de navigation ayant des première et deuxième positions, pour orienter le champ de vision de tête de caméra face, respectivement, aux première et deuxième longueurs radiales contiguës des aubes mobiles de turbine ;
à inspecter ladite première longueur radiale des aubes mobiles de turbine en rotation en positionnant automatiquement l'endoscope d'inspection (220) et le champ de vision avec le système de commande sur la première position du trajet de navigation et à prendre une image par caméra de ladite première longueur d'au moins une pluralité d'aubes mobiles de turbine sans intervention humaine ;
à inspecter ladite deuxième longueur radiale des aubes mobiles de turbine en rotation en positionnant automatiquement l'endoscope d'inspection et le champ de vision avec le système de commande sur la deuxième position du trajet de navigation et à prendre une image par caméra de ladite deuxième longueur d'au moins la même pluralité d'aubes mobiles de turbine sans intervention humaine, et
à conserver les images par caméra des première et deuxième longueurs d'aubes mobiles en vue de les examiner et, si cela est souhaité, à combiner des premières et deuxièmes images correspondantes pour au moins une aube mobile de turbine afin d'en former une image composite.

20. Procédé selon la revendication 19, étant entendu que le système d'inspection comprend par ailleurs un entraînement d'articulation (232), couplé à la tête (230) de caméra et au système de commande (180), pour articuler le champ de vision de tête de caméra par rapport à l'axe central de l'endoscope d'inspection, étant entendu que le système de commande articule la tête de caméra, respectivement, dans les première et deuxième positions d'articulation qui correspondent aux première et deuxième positions respectives du trajet de navigation.
